(19) **Europäisches Patentamt**
**European Patent Office**
**Office européen des brevets**

(11) **EP 3 614 218 B1**

(12) # EUROPEAN PATENT SPECIFICATION

(45) Date of publication and mention
of the grant of the patent:
**06.04.2022 Bulletin 2022/14**

(21) Application number: **18190294.1**

(22) Date of filing: **22.08.2018**

(51) International Patent Classification (IPC):
**G05B 19/048** *(2006.01)*  **H02P 21/00** *(2016.01)*
**G05B 13/04** *(2006.01)*

(52) Cooperative Patent Classification (CPC):
**G05B 13/048; H02P 21/0003**

(54) **CASCADED CONTINUOUS AND FINITE MODEL PREDICTIVE CONTROL FOR MECHATRONIC SYSTEMS**

KASKADIERTE KONTINUIERLICHE UND FINITE MODELLPRÄDIKTIVE REGELUNG FÜR MECHATRONISCHE SYSTEME

COMMANDE PRÉDICTIVE DE MODÈLES FINIS ET CONTINUS EN CASCADE POUR SYSTÈMES MÉCATRONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2020 Bulletin 2020/09**

(73) Proprietor: **Technische Hochschule Nuernberg Georg-Simon-Ohm**
**90489 Nuernberg (DE)**

(72) Inventors:
• **Wendel, Sebastian**
  **90403 Nürnberg (DE)**
• **Haucke-Korber, Barnabas**
  **90429 Nürnberg (DE)**
• **Dietz, Armin**
  **90607 Rückersdorf (DE)**

(74) Representative: **Frenkel, Matthias Alexander Wuesthoff & Wuesthoff**
**Patentanwälte PartG mbB**
**Schweigerstraße 2**
**81541 München (DE)**

(56) References cited:
**WO-A1-2014/183930     US-A1- 2017 227 937**

• **ABDELSALAM A. AHMED ET AL: "A Comparison of Finite Control Set and Continuous Control Set Model Predictive Control Schemes for Speed Control of Induction Motors", IEEE TRANSACTIONS ON INDUSTRIAL INFORMATICS, vol. 14, no. 4, 1 April 2018 (2018-04-01), pages 1334-1346, XP055552330, US ISSN: 1551-3203, DOI: 10.1109/TII.2017.2758393**
• **JOSE RODRIGUEZ ET AL: "State of the Art of Finite Control Set Model Predictive Control in Power Electronics", IEEE TRANSACTIONS ON INDUSTRIAL INFORMATICS, IEEE SERVICE CENTER, NEW YORK, NY, US, vol. 9, no. 2, 1 May 2013 (2013-05-01), pages 1003-1016, XP011487241, ISSN: 1551-3203, DOI: 10.1109/TII.2012.2221469**

**Description**

Examples relate to concepts for a control system and applications thereof and in particular to a method for controlling a mechatronic system and a controller for controlling a mechatronic system.

Current, speed and position control for electrical drives imply several control objectives. Typically, these control objectives are separated to consider the different time ranges (e.g. field-oriented control (FOC) with PI controllers). The electrical time constants of electrical drives are usually in the range of several hundred microseconds, while the mechanical time constants are in the range of several milliseconds. However, the relation between the time constants usually has the factor 10 to 100.

Model predictive control enables a foresighted optimisation of the current as well as reduced speed and/or position overshoots. Theoretically, all these goals are possible in one cost function. However, some criteria have different time ranges. For an optimal prediction, the entire transient process would be useful. Finite Control Set Model Predictive Control (FCS-MPC) enables a direct optimization of the switching states of a converter and the phase current. However, FCS-MPC is limited to a few discrete time steps into the future (e.g. 5 to 8). This is due to an exponential growth of calculation effort. Longer horizons would impede an implementation of FCS-MPC, even if branch and bound algorithms are used. Furthermore, longer horizons do not affect the phase current noticeably. However, the prediction of mechanical transient processes requires a longer horizon or bigger time steps (lower calculation frequency), in comparison with the current control.

Prior art approaches show limited performance, especially if oscillations in mechanical speed should be identified for a long horizon. Hierarchical Model Predictive Control (MPC) structures introduce a more layer controller in order to incorporate different ranges of the time constants in a controlled system. For example, a hierarchical MPC can be used for the control of smart grids. Another example of a hierarchical MPC is a Continuous Control State MPC (CCS-MPC) power controller and an FCS-MPC current controller for a multi-level matrix converter. A further example is given by a cascaded dead-beat speed and FCS-MPC current control, even though the dead-beat controller only predicts one-step ahead.

WO 2014/033155 A1 discloses a model predictive control approach of a DC/AC converter with a hierarchical control structure with an upper and lower control. The upper control is based on a vector control with a modulator and the lower control stage utilizes the redundancy in the converter states in order to balance the capacitor voltages in the multilevel converter. A hierarchical structure is used. In particular, the described concept focuses on the balance of the capacitor voltages and uses different control algorithms.

WO 2014/064141 A1 discloses an FCS-MPC structure including a sphere decoder as a kind of branch and bound algorithm.

US 2017/0133845 A1 disclose a method to reduce harmonics in an electrical grid to compensate reactive power and to minimize converter losses.

WO 2009/080407 A1 discloses a hybrid implementation of FCS-MPC, in which a control algorithm is implemented on a Field Programmable Gate Array (FPGA) interconnected with a digital signal processor (DSP) to reduce the computation time of the algorithm. This is in contrast with a single software-based implementation on the DSP or a single hardware-based implementation on an FPGA. This application uses a hybrid calculation platform for FCS-MPC.

WO 2013/110532 A1 discloses a model predictive control method for an electrical converter, which is parallelized and executed in a multi-core processor to avoid an FPGA implementation. A separate way of implementation without an FPGA is described.

WO 2014/006200 A1 discloses an FPGA for controlling an electrical modular multilevel converter with model predictive direct current control (MPDCC).

WO 2016/202623 A1 discloses an overall implementation of FCS-MPC on an FPGA for controlling an electrical converter.

WO 2014/183930 A1 discloses a cascaded control structure for mechanical systems coupled to an electrical drive. It includes a process control layer, a mechanical variable control layer and a drive control layer. The mechanical control layer uses a linearized model predictive control approach in order to estimate the mechanical behaviour based on a model description of the controlled system. The technique focuses on long and thin drive shafts, which enable torsional oscillations.

Control systems may have to be optimized with respect to both electrical and mechanical behaviour of mechatronic systems. Nevertheless, it is desired to form a controller which considers mechanical and electrical constraints.

There may be a demand to provide concepts for optimized control of mechatronic systems.

Such a demand may be satisfied by the subject-matter of the claims.

According to a first aspect, a method for controlling a mechatronic system is provided. The method comprises receiving, by a first control unit, values including mechanical characteristics of the mechatronic system, from the mechatronic system. The method further comprises predicting, by the first control unit, a mechanical behaviour of the mechatronic system based on a continuous model predictive control approach. The continuous model predictive control approach is applied on the values including the mechanical characteristics of the mechatronic system. The method further comprises providing, by the first control unit, the predicted mechanical behaviour to a second control unit. The method further comprises receiving, by the second control unit, values including electrical characteristics of the mechatronic system, from the mechatronic system. The method further comprises optimizing, by the second control unit, a control signal for an actuator. The step of optimizing includes using the predicted mechanical behaviour. The step of optimizing further includes using a prediction of an electrical behaviour of the mechatronic system based on a direct model predictive control approach. The direct model predictive control approach is applied on the values including the electrical characteristics of the mechatronic system. The method further comprises providing, by the second control unit, the control signal to the actuator for controlling the mechatronic system.

Accordingly, the method may be understood to provide two types of model predictive control approaches combined to a cascaded approach e.g. a Cascaded Continuous Finite Model Predictive Control (CCF-MPC) which is introduced herein. On the one hand, a predictive choice of the control signal for the whole mechatronic system may be possible. On the other hand, a separation of time constants of a mechanical and an electrical part of the mechatronic system may be adjusted/fit to an optimum between discrete step size of prediction steps and a possible length of a time horizon for calculation. Thus, the control of the mechatronic system can be optimized.

The predicted mechanical/electrical behaviour of the mechatronic system may be an inherent behaviour of the mechatronic system which may occur. The control signal may be adapted/fit to compensate the inherent behaviour of the mechatronic system. The control signal may also be adapted/fit to compensate an unexpected behaviour of the mechatronic system based on the predicted mechanical/electrical behaviour of the mechatronic system.

The second control unit may be adapted to use the direct model predictive control approach together with the predicted mechanical behaviour. For example, the predicted mechanical behaviour may be set during a specific time interval. The second control unit then may be adapted to perform multiple predictions based on the direct model predictive control approach within the specific time interval to optimally predict the electrical behaviour beside the mechanical behaviour of the mechatronic system.

The first and second control units may be cascaded. The first control unit may define an upper control layer. The second control unit may define a lower control layer.

The second control unit may be adapted to perform the optimization/prediction in parallel, meanwhile the first control unit is adapted to perform the respective prediction in series. Thus, the first control unit may be adapted to engage with the second control unit to provide the second control unit with a serially predicted mechanical behaviour. The second control unit then may be adapted to perform a parallel prediction on the electrical behaviour of the mechatronic system.

The mechatronic system may comprise an electrical drive. The mechatronic system may comprise a coupled mechanical load. The mechanical load may be coupled to the electrical drive.

The mechatronic system can be an electrical drive system. Then, the actuator may be a power inverter for the electrical drive system. The electrical drive system may comprise an electrical motor (also referred to as electrical drive herein) and a mechanical load.

The mechanical load may be (directly) connected to the electrical motor. The control signal for the actuator (power inverter) may be provided in the form of switching states to the power inverter. Then, the power inverter may change phase currents to be applied on the electrical motor of the electrical drive system based on the switching states.

The continuous model predictive control approach comprises a Continuous Control Set Model Predictive Control (CCS-MPC) approach. The direct model predictive control (DMPC) approach comprises a Finite Control Set Model Predictive Control (FCS-MPC) approach.

The continuous model predictive control approach can be any Model Predictive Control (MPC) based approach which enables the prediction of the mechanical behaviour for at least two time steps into the future. All time steps used for prediction by the first control unit may be referred to as mechanical prediction horizon. Further, the second control unit may be adapted to predict the electrical behaviour for an electrical prediction horizon. The granularity of the time steps for the mechanical and electrical prediction horizon may be different. The granularity of the electrical time steps may be smaller. A time step can be understood as an interval in which a single step of prediction is performed.

The values including the mechanical characteristics of the mechatronic system may include position information and/or speed information. Further, the values including the electrical characteristics of the mechatronic system may include current information, torque information and/or flux information of the mechatronic system.

The values including the mechanical characteristics of the mechatronic system may indicate values for the electrical drive and/or for the mechanical load.

The values including the mechanical characteristics of the mechatronic system and the values including the electrical characteristics of the mechatronic system may be measured or estimated input values from the mechatronic system. The values including the mechanical characteristics of the mechatronic system and the values including the electrical characteristics of the mechatronic system may also be reference values. The reference values may be equivalent values with respect to the measured or estimated input values. For example, there may be reference values for mechanical characteristics and reference values for electrical characteristics which may serve as a basis for the steps performed by the first and second control units. The mechanical characteristics comprise features like mechanical movement, speed, acceleration, oscillation, and/or torque of the electrical drive system. For example, the values including the mechanical characteristics can be measured or estimated. The mechanical characteristics can include mechanical characteristics of the electrical motor and/or the mechanical load. Thus, values including the mechanical characteristics may be measured or estimated by receiving current information on the mechanical load and/or the electrical motor directly from the mechanical load and/or the electrical motor.

The continuous model predictive control approach and the direct model predictive control approach may each be based on an analytical description of the mechatronic system.

The step size of predicting the electrical behaviour may have a higher calculation rate than the step size of predicting the mechanical behaviour. The step of predicting the electrical behaviour may be performed at least for 2 sub-intervals within a time interval, in which the step of predicting the mechanical behaviour is performed.

The direct model predictive control approach can be any Direct MPC (DMPC) approach. The DPMC can be a Finite Control Set - MPC (FCS-MPC). The FCS-MPC can enable a prediction of the electrical behaviour for at least a time interval within each of the at least two time steps. The time interval can be a single time interval or include a subset of time-intervals, for example at least 2 (or 3 or 4 or more).

The mechanical and the electrical behaviours may be analytical behaviours of the mechatronic system. The DMPC/FCS-MPC and CCS-MPC approaches may be based on a prediction of the analytical mechatronic system behaviour of more than one-step ahead. The one-step ahead may be understood as a time horizon which includes several time steps for which the prediction is performed in order to better predict the mechanical and electrical behaviour.

The step of predicting the electrical behaviour can have at least a 2 (or 10) times higher calculation rate than the step of predicting the mechanical behaviour.

The mechanical behaviour may be predicted by the first control unit for a predetermined time interval in which the electrical behaviour is predicted by the second control unit for several, for example 2 (or 10), time intervals. The several time intervals of the first control unit may be included within the predetermined time interval of the second control unit.

The step of predicting, by the first control unit, the mechanical behaviour may be continuous. The predicted mechanical behaviour can be a continuous actuating signal for the second control unit. Thus, the actuating signal together with the predicted electrical behaviour form the basis for the control signal for the actuator.

The actuating signal may comprise information in the form of a space vector. The space vector may comprise information of a reference torque and/or reference flux. Thus, the space vector acts as setpoint/bias for the control signal provided to the actuator by the second control unit.

All steps of the method according to the first aspect may be carried out on a system-on-a-chip (SoC) calculation platform. The SoC platform may have one or more processors. The SoC platform may have a Field Programmable Gate Array (FPGA) in a single chip. The method may be real-time implemented on the SoC calculation platform. The second control unit may be implemented on the FPGA. The first control unit may be implemented on the one or more processors.

All steps of the method according to the first aspect may be carried out on one or more processors. Thus, the first and second control units may be implemented fully on the one or more processors.

Further, all steps of the method according to the first aspect may be carried out on an FPGA. Thus, the first and second control units may be implemented fully on the FPGA.

According to a second aspect, a computer program is provided. The computer program, when being executed by a processor and/or FPGA, is adapted to carry out the steps of the method according to the first aspect.

According to a third aspect, a computer-readable medium is provided, on which a computer program according to the second aspect is stored.

According to a fourth aspect, a controller for controlling a mechatronic system is provided. The controller comprises a first control unit and a second control unit. The first control unit is adapted to receive values including mechanical characteristics of the mechatronic system, from the mechatronic system. The first control unit is adapted to predict a mechanical behaviour of the mechatronic system based on a continuous model predictive control approach applied on the values including the mechanical characteristics of the mechatronic system, wherein the continuous model predictive control approach comprises a Continuous Control Set Model Predictive Control, CCS-MPC, approach. The first control unit is adapted to provide the predicted mechanical behaviour to the second control unit. The second control unit is adapted to receive values including electrical characteristics of the mechatronic system, from the mechatronic system. The second control unit is adapted to optimize a control signal for an actuator using the predicted mechanical behaviour. Further, the second control unit is adapted to optimize the control signal for the actuator using a prediction of an electrical behaviour of the mechatronic system based on a direct model predictive control approach applied on the values including the electrical characteristics of the mechatronic system, wherein the direct model predictive control approach comprises a Finite Control Set Model Predictive Control, FCS-MPC, approach. The second control unit is adapted to provide the control signal to the actuator for controlling the mechatronic system.

The mechatronic system or the controller may further comprise the actuator. The actuator may be adapted to receive the control signal. The actuator may be adapted to control the mechatronic system based on the control signal.

According to a fifth aspect, a system which includes a mechatronic system and the controller according to the fourth aspect is provided.

Since electrical and mechanical time constants are quite often in different ranges, a cascaded structure for MPC as disclosed herein may be advantageous because of different ranges in electrical and mechanical time constants.

Furthermore, switching operations (finite switching states) may have an impact on an optimal current control and a high current dynamic of the mechatronic system. However, switching operations may have no significant impact on speed control (stability excluded). Therefore, FCS-MPC may be advantageous for current, flux and torque control.

The FCS-MPC approach may have the advantage of a very stable behavior, for example for the current control.

The CCS-MPC approach may have the advantage of a foresighted mechanical optimization of a speed/position control under consideration of mechanical oscillations (e.g. two-mass-system).

Furthermore, the CCS-MPC approach may have a linear growth in calculation effort which behaves proportional to the prediction horizon. The first control unit may also be referred to herein as speed/position controller. The speed/position controller may provide a reference current (or torque) for the second control unit. The second control unit may also be referred to herein as DMPC/FCS-MPC current control and may include a current reference generator. The provision of the reference current (or torque) (e.g. maximal torque per ampere approach) may aim at a maximum dynamic and a low total harmonic distortion (THD) afterwards.

Herein, the term "the controlled system" may be used in equivalence to the term "the mechatronic system".

One or more of the embodiments may establish a cascaded structure with FCS-MPC or DMPC for an optimized current, flux and/or torque control and a CCS-MPC approach for an optimal speed and/or position control for mechatronic systems such as electrical drives. The cascaded structure may run with different calculation rates depending upon the electrical and mechanical time constants of the controlled system. The controlled system may comprise the actuator and the electrical drive. Herein, two different Model Predictive Control (MPC) approaches may be used to create a cascaded MPC approach for mechatronic systems, for example electrical drives: a Finite Control Set approach (FCS-MPC) for an optimized current, flux and/or torque control; a Continuous Control Set approach (CCS-MPC) for an optimal speed and/or position control. The cascaded control scheme may allow a prediction depending on electrical and mechanical time constants. Herein, the combination of FCS-MPC (or DMPC) and CCS-MPC to the Cascaded Continuous Finite Model Predictive Control (CCF-MPC) may offer different calculation rates for the electrical and the mechanical controlled system. The electrical and mechanical behaviours of the mechatronic system may be the electrical and mechanical behaviours of the controlled system.

The CCF-MPC may be particularly useful for controlled systems with different electrical and mechanical time constants, allowing the electrical and the mechanical system to be separately predicted and optimized.

Furthermore, the CCF-MPC may be useful for high dynamic drive systems, which are under the influence of mechanical vibrations on the driveshaft (e.g. two-mass oscillator). In these drive systems, a forward-looking optimization of the current, flux and/or torque can be carried out by a FCS-MPC or a DMPC approach.

Furthermore, an optimization of the speed/position control and minimization of mechanical vibrations can be done by a CCS-MPC approach.

Thus, advantages of both control methods (FCS-MPC and CCS-MPC) can be combined and optimized for the respective parts of the controlled system. Both predictive methods may be characterized by a so-called "long horizon", which calculate at least more than one discrete time step into the future.

However, CCS-MPC may cover a time period regarding the slower mechanical time constant and may serve as a basis (trajectory) for the underlying DMPC/FCS-MPC approach, which may cover a time period regarding the faster electrical time constant.

MPC may enable a foresighted calculation in order to optimize the necessary control criteria (e.g. current, speed, position) or further control criteria (e.g. mechanical oscillations). Herein, a predictive control with a long predictive horizon (more than one step into the future) may be provided for the electrical and mechanical system dependent on the respective time constants.

The optimization of the current with FCS-MPC may enable a lower torque ripple, lower THD and the possibility to consider the switching action in the cost function. Next to the consideration of several criteria in one or several serial cost functions, FCS-MPC can set the direct voltage vector, which may enable a high dynamic. The optimization of the speed and/or position with CCS-MPC may enable a lower speed ripple and active vibration damping.

This above introduced approach may enable a maximum dynamic reaction in torque, combined with a planning speed and/or position control.

For example, the above introduced approach may be used for handling systems or machine tools. In these applications, a highly dynamic behaviour is necessary to achieve the reference position without position overshoots as fast as possible. First, the highly dynamic behaviour may require a fast current control (e.g. by FCS-MPC) with low current ripple and harmonics, because these would cause torque ripple, which is undesirable. Second, mechanical oscillations can occur in these applications, which may be caused by a changing load or a changing frictional torque.

Furthermore, the mechanical system may include several mechanical gears and mechanical springs, which may influence the load and may cause additional oscillations. The load may be directly coupled through these additional mechanical components to the mechanical shaft of the controlled electrical drive of the mechatronic system. The CCS-MPC approach may use an analytical model of the mechanical system (mechanical load), which may be coupled to the shaft (directly connected to the electrical drive). In this manner, the oscillations of the elastically coupled electrical drive system (e.g. two-mass system: electrical drive and mechanically coupled load) can be predicted and the oscillations can be avoided before they actually occur.

The CCF-MPC may have a high torque dynamic and may further avoid possible mechanical oscillations which may lead to a higher production rate. Consequently, more parts per hour may be manufactured in respective manufacturing industries. Thus, a main benefit of CCF-MPC may be a higher productivity (more parts per hour with the same number of production machines).

Another application of CCF-MPC may be the use of test systems in the automotive area. In the automotive area, test systems are widely used for the development of new actuators or during manufacturing for end-of-line tests. The actuators are, for example, necessary in the automotive area for electrical window regulators, sunroofs, headlamp range adjustment and so on. Usually, the development of the application is not finished during the development of the actuator. Therefore, test systems may be necessary to give the developer of the actuator a chance to test the actuator in a realistic environment. The test system must behave as realistic as possible compared to the real application. For example, in case of the sunroof, the test system must also consider the end stop. This may require a high torque dynamic for the electrical motor in the test system in order to emulate the mechanical end stop and a detailed model of the controlled mechanical system (e.g. springs) to depict the real application. The CCF-MPC may combine the FCS-MPC with the highly dynamic behaviour for the current and the CCS-MPC with the prediction of the mechanical behaviour of the coupled mechanical components (e.g. spring) and may avoid oscillations, which would only occur in the test system and not in the real application or the other way around.

It is clear to a person skilled in the art that the statements set forth herein under use of hardware circuits, software means, or a combination thereof may be implemented. The software means can be related to programmed microprocessors or a general computer, an ASIC (Application Specific Integrated Circuit) and/or DSPs (Digital Signal Processors). For example, the first control unit, the second control unit, the mechatronic system, the actuator and/or the electrical drive system may be implemented partially as a computer, a logical circuit, an FPGA (Field Programmable Gate Array), a processor (for example, a microprocessor, microcontroller ($\mu$C) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP. It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefore, methods like swapping and paging can be deployed.

Even if some of the aspects described above have been described in reference to the method, these aspects may also apply to controller. Likewise, the aspects described above in relation to controller may be applicable in a corresponding manner to the method.

It is also to be understood that the terms used herein are for purpose of describing individual embodiments and are not intended to be limiting. Unless otherwise defined, all technical and scientific terms used herein have the meaning which corresponds to the general understanding of the skilled person in the relevant technical field of the present disclosure; they are to be understood too neither too far nor too narrow. If technical terms are used incorrectly in the present disclosure, and thus do not reflect the technical concept of the present disclosure, these should be replaced by technical terms which convey a correct understanding to the skilled person in the relevant technical field of the present disclosure. The general terms used herein are to be construed based on the definition in the lexicon or the context. A too narrow interpretation should be avoided.

It is to be understood that terms such as e.g. "comprising" "including" or "having" etc. mean the presence of the described features, numbers, operations, acts, components, parts, or combinations thereof, and do not exclude the presence or possible addition of one or more further features, numbers, operations, acts, components, parts or their combinations.

Although terms like "first" or "second" etc. may be used to describe different components or features, these components or features are not to be limited to these terms. With the above terms, only one component is to be distinguished from the other. For example, a first component may be referred to as a second component without departing from the scope of the present disclosure; and a second component may also be referred to as a first component. The term "and/or" includes both combinations of the plurality of related features, as well as any feature of that plurality of the described plurality of features.

In the present case, if a component is "connected to", "in communication with" or "accesses" another component, this may mean that it is directly connected to or directly accesses the other component; however, it should be noted that another component may be therebetween. If, on the other hand, a component is "directly connected" to another component or "directly accesses" the other component, it is to be understood that no further components are present therebetween.

In the following, the preferred embodiments of the present disclosure will be described with reference to the accompanying drawings; the same components are always provided with the same reference symbols.

In the description of the present disclosure, detailed explanations of known connected functions or constructions are omitted, insofar as they are unnecessarily distracting from the present disclosure; such functions and constructions are, however, understandable to the skilled person in the technical field of the present disclosure. The accompanying drawings are illustrative of the present disclosure and are not to be construed as a limitation. The technical idea of the present disclosure is to be construed as comprising, in addition to the accompanying drawings, all such modifications, variations and variants.

Other objects, features, advantages and applications will become apparent from the following description of non-limiting embodiments regarding the accompanying drawings. In the drawings, all described and/or illustrated features, alone or in any combination form the subject matter disclosed therein, irrespective of their grouping in the claims or their relations/references. The dimensions and proportions of components or parts shown in the figures are not necessarily to scale; these dimensions and proportions may differ from illustrations in the figures and implemented embodiments.

Figure 1    schematically shows method for controlling a mechatronic system;

Figure 2    schematically shows a system with a mechatronic system and a controller for controlling the mechatronic system;

Figure 3    schematically shows a cascaded control structure;

Figure 4    schematically shows an electrically and mechanically controlled system;

Figure 5    schematically shows a flow chart for the FCS-MPC approach;

Figure 6    schematically shows a time behaviour of a cascaded control system; and

Figure 7    schematically shows a time behaviour of a mechanically controlled system.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

The method for controlling a mechatronic system, the controller and the system comprising the mechatronic system and the controller will now be described with respect to the embodiments.

In the following, without being restricted thereto, specific details are set forth to provide a thorough understanding of the present disclosure. However, it is clear to the skilled person that the present disclosure may be used in other embodiments, which may differ from the details set out below.

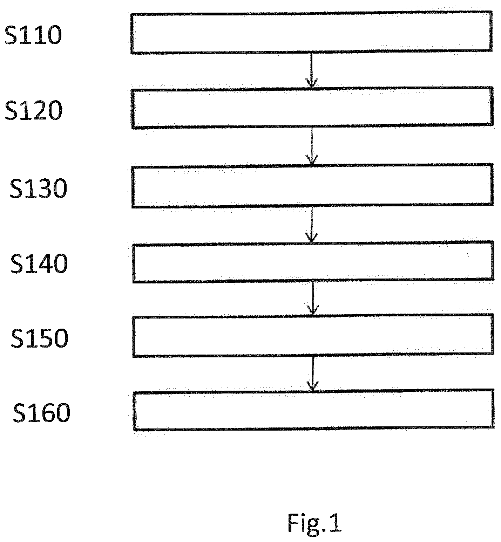

Figure 1 schematically shows a method for controlling a mechatronic system. The method comprises receiving, in step S110, by a first control unit, values including mechanical characteristics of the mechatronic system, from the mechatronic system.

The method comprises predicting, in step S120, by the first control unit, a mechanical behaviour of the mechatronic system based on a continuous model predictive control approach applied on the values including the mechanical characteristics of the mechatronic system. The method comprises providing, in step S130, by the first control unit, the predicted mechanical behaviour to a second control unit. The method comprises receiving, in step S140, by the second control unit, values including electrical characteristics of the mechatronic system, from the mechatronic system. The method comprises optimizing, in step S150, by the second control unit, a control signal for an actuator using i) the predicted mechanical behaviour and ii) a prediction of an electrical behaviour of the mechatronic system based on a direct model predictive control approach applied on the values including the electrical characteristics of the mechatronic system. The method comprises providing, in step S160, by the second control unit, the control signal to the actuator for controlling the mechatronic system.

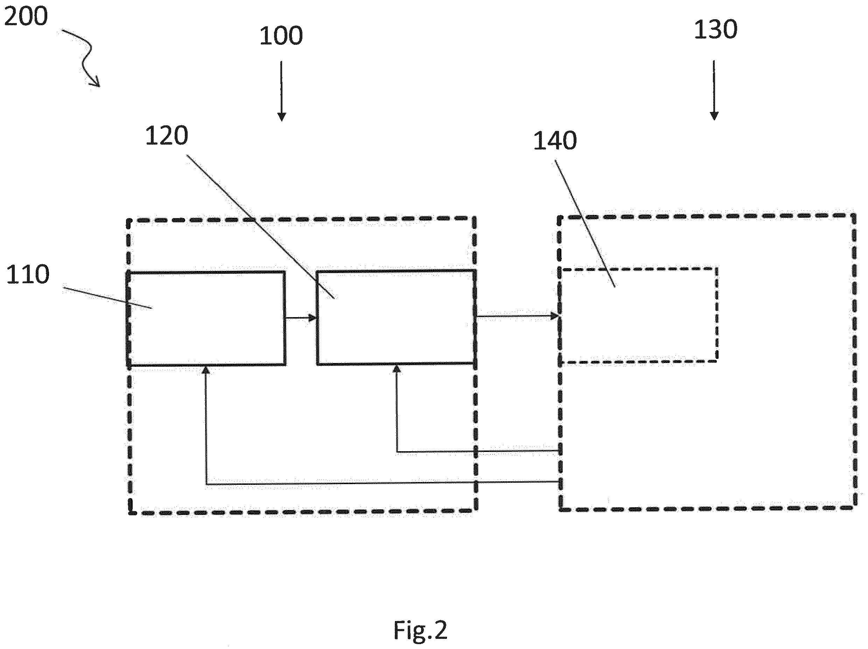

More details and aspects are mentioned in connection with the embodiments described above or below. The embodiment shown in Fig. 1 may comprise one or more optional additional features corresponding to one or more aspects mentioned in connection with the proposed concept or one or more embodiments described below (e.g. Fig. 2 - 7).

Figure 2 schematically shows a system 200 with a mechatronic system 130 and a controller 100 for controlling the mechatronic system. The controller 100 comprises a first control unit 110 and a second control unit 120. The controller 100 may further comprise a control platform. An actuator may be part of the mechatronic system 130. The first control unit 110 is adapted to receive values including mechanical characteristics of the mechatronic system 130, from the mechatronic system 130. The first control unit 110 is adapted to predict a mechanical behaviour of the mechatronic system 130 based on a continuous model predictive control approach applied on the values including mechanical characteristics of the mechatronic system 130. The first control unit 110 is adapted to provide the predicted mechanical behaviour to a second control unit 120. The second control unit 120 is adapted to receive values including electrical characteristics of the mechatronic system 130, from the mechatronic system 130. The second control unit 120 is adapted to optimize a control signal for an actuator 140 using i) the predicted mechanical behaviour and ii) a prediction of an electrical behaviour of the mechatronic system 130 based on a direct model predictive control approach applied on the values including the electrical characteristics of the mechatronic system 130. The second control unit 120 is adapted to provide the control signal to the actuator 140 for controlling the mechatronic system 130. The first control unit 110 may be referred to as upper control layer or controller 110 or speed controller 110 hereinafter. The second control unit 120 may be referred to as lower control layer or controller 120 or current controller 120 hereinafter.

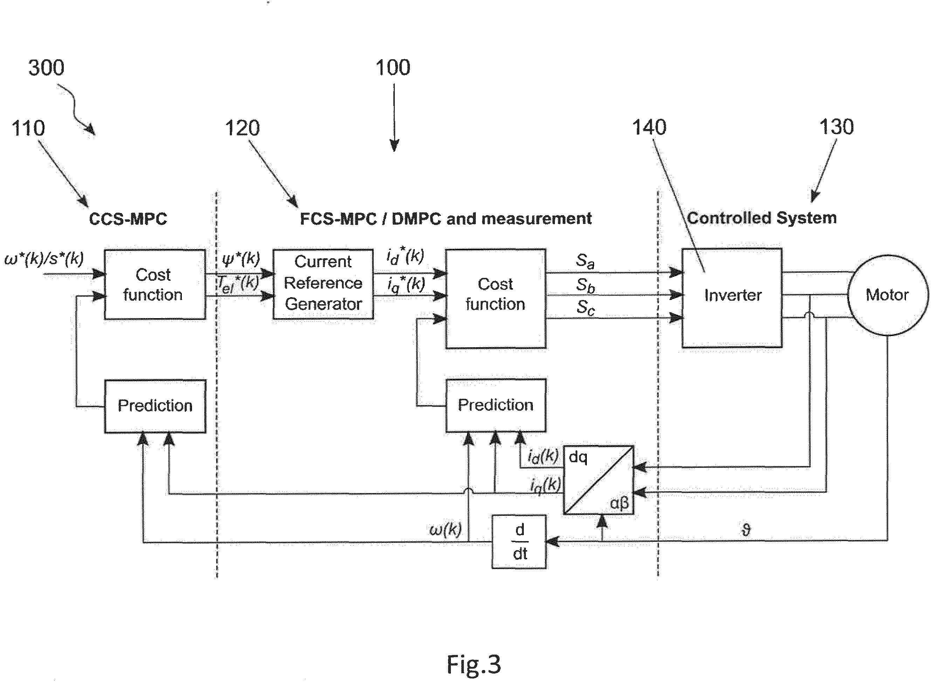

More details and aspects are mentioned in connection with the embodiments described above or below. The embodiment shown in Fig. 2 may comprise one or more optional additional features corresponding to one or more aspects mentioned in connection with the proposed concept or one or more embodiments described above (e.g. Fig. 1) or below (e.g. Fig. 3 - 7).

Figure 3 schematically shows a cascaded control structure (or system) 300. In this embodiment, the system 300 comprises the cascaded MPC controller 100, the mechatronic system 130 and the actuator, for example the inverter 140. The cascaded control structure 300 has the FCS-MPC for the faster and lower electrical control loop 120 and CCS-MPC for the slower and upper mechanical control loop 110. Both MPC approaches have a separate prediction model and cost function. FCS-MPC has a model for the electrical controlled system and CCS-MPC a model for the mechanical controlled system. The current reference generator between the two controllers 110 and 120 is optional, depending on the used motor (model).

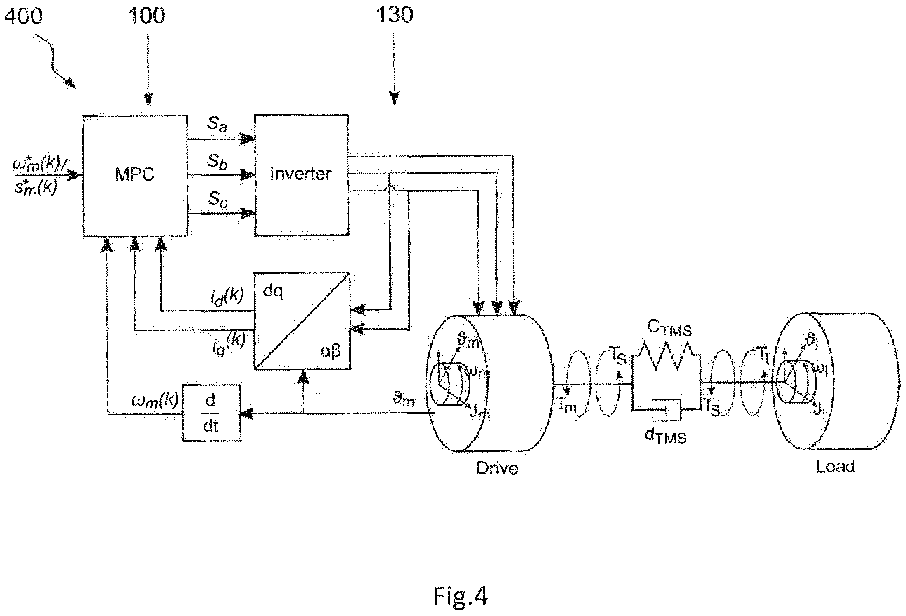

More details and aspects are mentioned in connection with the embodiments described above or below. The embodiment shown in Fig. 3 may comprise one or more optional additional features corresponding to one or more aspects mentioned in connection with the proposed concept or one or more embodiments described above (e.g. Fig. 1 - 2) or below (e.g. Fig. 4 - 7).

Figure 4 schematically shows a control structure 400 having an electrically and mechanically controlled system 130. The calculation platform includes all parts of the cascaded MPC controller 100. The mechanical system may include different components, which are coupled to the mechanical shaft of the controlled drive of the mechatronic system 130. The mechanical system is the basis for the CCS-MPC approach.

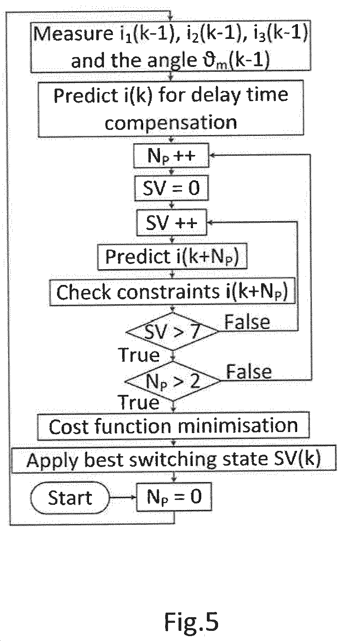

More details and aspects are mentioned in connection with the embodiments described above or below. The embodiment shown in Fig. 4 may comprise one or more optional additional features corresponding to one or more aspects mentioned in connection with the proposed concept or one or more embodiments described above (e.g. Fig. 1 - 3) or below (e.g. Fig. 5 - 7).

Figure 5 schematically shows a flow chart for the FCS-MPC approach. The flow chart shows calculation states for the FCS-MPC approach at the example of a two-level voltage source inverter with six active space vectors and two zero space vectors for a three-phase system. In the example, a prediction horizon of $N_p = 2$ is used for the current. The schematic can be adapted for more voltage-levels and a higher horizon.

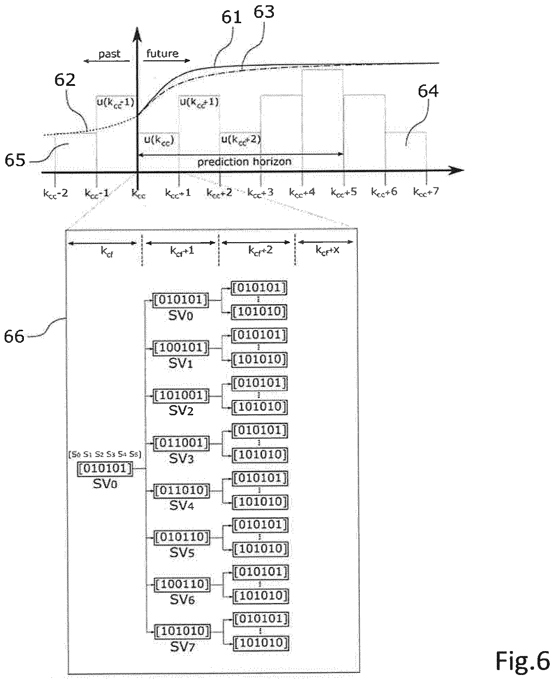

More details and aspects are mentioned in connection with the embodiments described above or below. The embodiment shown in Fig. 5 may comprise one or more optional additional features corresponding to one or more aspects mentioned in connection with the proposed concept or one or more embodiments described above (e.g. Fig. 1 - 4) or below (e.g. Fig. 6 - 7).

Figure 6 schematically shows a time behaviour of a cascaded control system. The upper part shows the CCS-MPC prediction of the mechanical behaviour. The approach calculates a continuous current space vector or reference torque/flux with a lower calculation rate (e.g. 10 kHz). The underlying FCS-MPC current control uses this reference current as an input and predicts for every or a couple of finite switching possibilities in the inverter the resulting current of the controlled system 130 for a modifiable prediction horizon with a specific calculation rate (e.g. 100 kHz). In this example, with $f_{cf}$ = 100 kHz and $f_{cc}$ = 10 kHz, the reference current would be constant for 10 calculation steps in the FCS-MPC approach. The calculation rates can by modified dependent on the real electrical and mechanical time constants in the controlled system 130.

The reference numerals in figure 6 are given as follows:

61     reference signal for speed or position;
62     measured output;
63     predicted output from CCS-MPC;
64     predicted control signal for CCS-MPC;
65     past control signal; and
66     lower current control with FCS-MPC.

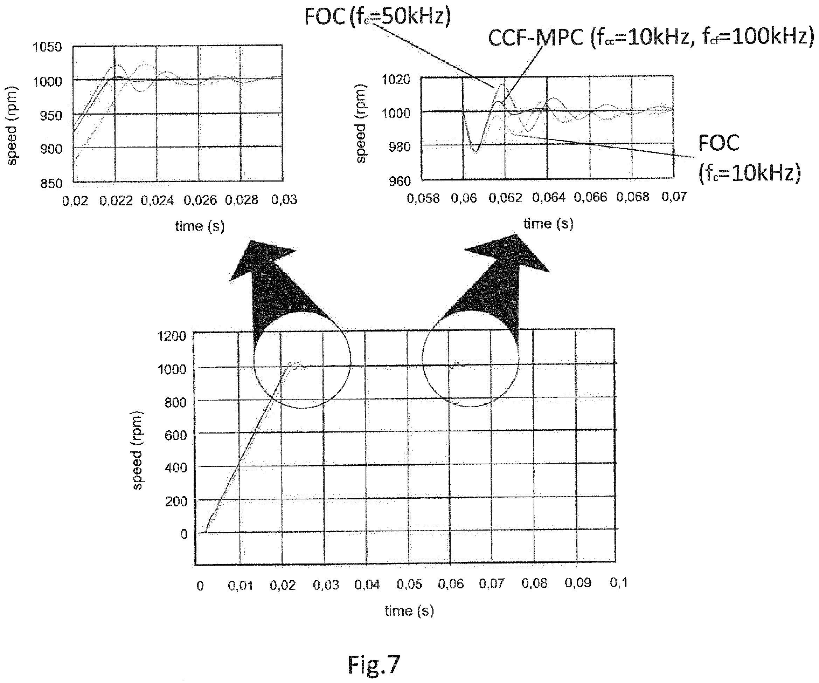

More details and aspects are mentioned in connection with the embodiments described above or below. The embodiment shown in Fig. 6 may comprise one or more optional additional features corresponding to one or more aspects mentioned in connection with the proposed concept or one or more embodiments described above (e.g. Fig. 1 - 5) or below (e.g. Fig. 7).

Figure 7 schematically shows a time behaviour of a mechanically controlled system 130, including mechanical vibrations. The CCS-MPC approach predicts this mechanical behaviour based on the mathematical description of the mechanical controlled system 130. The prediction enables a damping of the oscillations through the foresighted and planning character of CCS-MPC (e. g. $N_P$ = 15, $N_C$ = 6). The upper control layer calculates a continuous current space vector with a lower calculation rate (e.g. 10 kHz) compared to the underlying electrical control layer. Oscillations at the load are undesirable for most of the applications. Therefore, CCS-MPC enables, in combination with the underlying highly dynamic FCS-MPC, the damping of these oscillations.

More details and aspects are mentioned in connection with the embodiments described above or below. The embodiment shown in Fig. 7 may comprise one or more optional additional features corresponding to one or more aspects mentioned in connection with the proposed concept or one or more embodiments described above (e.g. Fig. 1 - 6) or below.

In one or more embodiments a Cascaded Continuous and Finite Model Predictive Control for Electrical Drive Systems may be provided.

The approach herein is a model predictive approach for the electrical and mechanical drive system separately. FCS-MPC is a non-linear control approach for the optimization of the electrical system (e.g. currents, torque) and CCS-MPC, with a linear or partly linearized non-linear model, the control approach for the mechanical system.

The main idea of a cascaded MPC structure is the separation of the electrical and the mechanical time constants. This enables a trade-off between a maximum horizon and a minimum of granularity for current/torque and speed/position.

Figure 3 discloses the cascaded MPC 100. The cascaded MPC 100 comprises two or more serial control layers 110 and 120 as known from the FOC with PI controllers. The fast and lower layer 120 controls the current, flux and torque with FCS-MPC or DMPC. The slow and upper layer 110 controls the speed and/or the position of the electrical drive with CCS-MPC. The interface between both control layers is the space vector for the reference currents or the necessary reference torque and/or reference flux. In other words, the idea is to give a current space vector as setpoint from the CCS-MPC to the FCS-MPC for simple systems (e.g. permanent magnet synchronous machine with surface mounted magnets (SPMSM)). If the machine has more than three phases (e.g. multi-phase machine), the symmetrical components with the positive sequence set ($\alpha$ - $\beta$) and the negative sequence sets (x - y), depending on the number of phases, must be controlled. The zero sequence set is not controlled.

This implies additional reference space vectors. For other synchronous machines, for example with a noticeable reluctance effect, a reference torque and reference flux is necessary. In this case, the generation of the torque consists partly of the difference between the inductances in d- and q-axis. For an inductance machine, the principle is similar. However, the interface of both controllers 110 and 120 is between the electrical and mechanical part of the controlled system 130. The controlled system 130 is a two-level or multi-level inverter with three or more phase legs for an electrical machine. At the example of a SPMSM, the reference value is set to a q-current setpoint $i_q{}^*$ and a d-current setpoint $i_d{}^*$ in a rotating coordinate system. Alternatively, an $\alpha$-current and a $\beta$-current setpoint in a non-rotating coordinate system can be calculated.

Furthermore, as shown in figure 3, it is possible to use a reference current generator (e.g. maximal torque per ampere approach) to generate the current reference for the FCS-MPC from the torque and/or flux reference of CCS-MPC.

Since the direct switching states have a marginal impact to the speed and/or position control and the CCS-MPC approach shows a linear growth for the calculation effort with the prediction horizon, CCS-MPC is ideal for a long horizon speed control. Furthermore, the approach may require a serial calculation in contrast to FCS-MPC, which enables a parallel calculation. Next to the serial calculation, the lower calculation rate for the speed controller 110 is an ideal requirement for an implementation on a CPU or a GPU. The FCS-MPC current control requires a fast calculation platform and enables a parallel implementation. The fast and parallel calculation is ideal for a hardware-based calculation platform (e.g. field programmable gate array (FPGA)). This makes the herein introduced cascaded MPC approach ideal for an implementation on a hybrid calculation platform such as a System-on-Chip (SoC) solution, which gets more and more acceptance in the field of control for power electronic systems. Typically, this SoC combines ARM processors with an FPGA in one chip. The ARM processor enables the serial calculation of CCS-MPC and the FPGA the implementation of the parallelizable FCS-MPC or DMPC approach. The shared RAM or the integrated communication interface enable a fast and deterministic data transfer between both calculation units and algorithms, which is essential for the real-time implementation. The herein disclosed method may be implemented on the hybrid SoC platform.

On the one side, the present disclosure may enable a highly dynamic current control for fast torque control with FCS-MPC, which can use the full DC-link voltage and can optimize the current waveform (e.g. low total harmonic distortion (THD)). On the other side, the CCS-MPC approach predicts the mechanical behaviour of the controlled system 130 (e. g. mechanical oscillations at the coupled load) in order to get a stable position and speed for the controlled load (see figure 7).

The FCS-MPC approach

The following paragraph explains the structure of an FCS-MPC approach at the example of a two-level voltage source inverter 140 with three phase legs and an exhaustive search method. The FCS-MPC is characterized by an optimization problem, respecting all possible time-discrete switching possibilities in the voltage-source inverter system. The number of switching states depend on the number of levels in the voltage-source inverter and the number of phases. Furthermore, additional branch and bound algorithms (e.g. sphere decoder) or sector MPC can be used to minimize the number of calculations by narrowing down the respected possible time-discrete switching states.

Hereinafter, a FCS-MPC approach is explained with an application example of a two-level voltage source inverter with three phase legs for a prediction horizon of $N_p$ = 2. In addition to the inverter, a permanent magnet synchronous machine with surface-mounted magnets (SPMSM) is used for the illustration.

The underlying FCS-MPC current control 120 in this example is characterized by using a reference current as input from the superimposed CCS-MPC approach. FCS-MPC predicts the resulting current in the controlled system 130 for every finite switching state in the inverter 140 for a modifiable prediction horizon with a specific calculation rate (e. g. $f_{cf}$ = 100 kHz), whereby $T_{cf}$ is the control period of the FCS-MPC approach. Figure 5 schematically shows the calculation states for the FCS-MPC approach at the example of a two-level voltage source inverter with six active space vectors and two zero space vectors for a three-phase system. In the example a prediction horizon of $N_p$ = 2 is used for the current. The principle can be adapted for more voltage levels and/or a longer horizon.

The used SPMSM can be described by the equations (1) and (2) with the phase resistance $R_{ph}$, the mechanical angular speed $\omega_m$, the rotor inertia J, the pole pairs $p$ and the flux constant of the permanent magnets $\psi_{PM}$. $T_{Mi}$ is the electromagnetic torque, which is produced in the air-gap. In equations (1) and (2), a change in speed is neglected. Since in most cases the calculation period $T_{cf}$ of the electrical layer is in the range of several microseconds (e.g. $r_{cf}$ = 10 μs) and the horizon is in the single-digit range, the change of the mechanical speed is negligible. Therefore, the mechanical speed of the rotor can be, but does not have to set constant for one electrical prediction period (= $T_{cf} \cdot N_p$). If the electrical and mechanical time constant is in the same range, this simplification cannot be made and the speed change must be taken into account.

$$\begin{bmatrix} \dfrac{di_d(t)}{dt} \\[2ex] \dfrac{di_q(t)}{dt} \\[2ex] \dfrac{dT_{Mi}(t)}{dt} \\[2ex] 0 \end{bmatrix} = \mathbf{A}_{cf} \cdot \begin{bmatrix} i_d(t) \\ i_q(t) \\ T_{Mi}(t) \\ \omega_m(t) \end{bmatrix} + \mathbf{B}_{cf} \cdot \begin{bmatrix} u_d(t) \\ u_q(t) \\ 0 \\ 0 \end{bmatrix} \quad (1)$$

$$\begin{bmatrix} i_d(t) \\ i_q(t) \\ T_{Mi}(t) \end{bmatrix} = \mathbf{C}_{cf} \cdot \begin{bmatrix} i_d(t) \\ i_q(t) \\ T_{Mi}(t) \end{bmatrix} \quad (2)$$

By neglecting the minimal reluctance effects for the SPMSM, only the $i_q$ current produces the torque. FCS-MPC uses the measured signals for the direct control of the switching states in the power stack.

$$\mathbf{A}_{cf} = \begin{bmatrix} -\dfrac{R_{ph}}{L_d} & \dfrac{L_q}{L_d}p\omega_m(t) & 0 & 0 \\[2ex] \dfrac{L_q}{L_d}p\omega_m(t) & -\dfrac{R_{ph}}{L_q} & 0 & -\dfrac{\Psi_{PM}}{L_q}p \\[2ex] \dfrac{3p(L_d - L_q)i_q(t)}{2} & \dfrac{3p\Psi_{PM}}{2} & 0 & 0 \\[2ex] 0 & 0 & 0 & 0 \end{bmatrix} \quad \mathbf{B}_{cf} = \begin{bmatrix} \dfrac{1}{L_d} & 0 & 0 & 0 \\[2ex] 0 & \dfrac{1}{L_q} & 0 & 0 \\[2ex] 0 & 0 & 0 & 0 \\[2ex] 0 & 0 & 0 & 0 \end{bmatrix} \quad \mathbf{C}_{cf} = \begin{bmatrix} 1 & 0 & 0 \\ 0 & 1 & 0 \\ 0 & 0 & 1 \end{bmatrix}$$

Therefore, the continuous-time controlled system 130 is discretized based on the Euler forward method or another discretization method. The discrete-time equations (3) and (4), which are necessary for a current control of the SPMSM, are summarised in a function and described as follows:

$$i_d(k+1|k) = \frac{T_{cf}}{L_d}\left(u_d(k|k-1) - R_{ph}i_d(k|k-1) + \omega_m(k|k-1)pL_qi_q(k|k-1)\right) + i_d(k|k-1) \quad (3)$$

$$i_q(k+1|k) = \frac{T_{cf}}{L_q}\left(u_q(k|k-1) - R_{ph}i_q(k|k-1) - \omega_m(k|k-1)p\left(L_di_d(k|k-1) + \Psi_{PM}\right)\right) + i_q(k|k-1) \quad (4)$$

This function is invoked for each possible space vector with the resulting voltages. In case of the SPMSM with three phase-legs and a two-level voltage source inverter, eight discrete space vectors (SV) are possible. The controller 120 repeatedly calls the function for each possible discrete space vector in each discrete time step. For a long horizon MPC, each predicted system state is the basis for a re-calculation. This results in an exponentially increase of the calculation effort. In addition, an update of the SVs based on the rotating $\vartheta_m$ is necessary for each prediction step. This is based on the moving motor shaft, which implies a modified rotor angle for each prediction step. The working principle of the implemented algorithm leads to a sequence shown in figure 5 for every control period $T_{cf}$.

$$\mathbf{J}_f(k) = \sum_{l=k}^{k+N_p-1} \lambda_{iq}\,|\,i_q(l+1|k) - i_q^*(k)\,| + \lambda_{id}\,|\,i_d(l+1|k)\,| + \hat{f}(i_{dq}(l+1|k)) \quad (5)$$

$$\hat{f}(\mathbf{i}_{dq}(l+1\,|\,k)) = \begin{cases} 1 & \text{if } \sqrt{i_d(l+1\,|\,k)^2 + i_q(l+1\,|\,k)^2} > i_{max} \\ 0 & \text{if } \sqrt{i_d(l+1\,|\,k)^2 + i_q(l+1\,|\,k)^2} \le i_{max} \end{cases} \quad (6)$$

The cost function (5) of the inner loop minimises the deviation of the torque producing current $|i_q - i_q{}^*|$, whereas $i_q{}^*$ is constant until the CCS-MPC approach changes the reference ($i_q{}^* = i_q{}^*$ I). Without the use of field weakening, $|i_d|$ is minimised as well. In equation (5) an error vector with the 1-norm is calculated. Although a 2-norm error vector can be used. After prediction, the minimum of the cost function is located in order to get the most suitable space vector. The weighting factors $\lambda$ enable the weighting of every optimisation criteria. The current limit (6) of the motor is directly considered for the maximum space vector length. For other electrical machines (e.g. induction machine) or if the synchronous machine has a noticeable reluctance effect, the cost function can be modified. The principal of FCS-MPC keeps the same.

The CCS-MPC approach

The upper control layer 110 for the mechanical system uses the CCS-MPC approach. The controller output of the controller 110 delivers a current space vector or reference torque and flux for the underlying current control and/or current reference generator. This continuous current space vector or reference torque and flux is calculated with a control frequency ($f_{cc}$) adjusted to the mechanical time constant of the controlled system 130. Usually this time constant is bigger than the electrical time constant. $T_{fric}$ and $d_{fric}$ are a combination of the coulomb friction, viscous friction and the stribeck friction, including influences of the iron losses.

For modelling the CCS-MPC speed controller 110, the current loop can be, but does not have to, approximated by a PT1 behaviour with $T_{cl} = 4 * T_{cf}$, whereby $T_{cf}$ is the control period of the FCS-MPC approach. This simplification is well known from the FOC and can be described by equation (7).

$$\frac{di_q(t)}{dt} = \frac{1}{T_{cl}}\left(i_q^*(t) - i_q(t)\right) \quad (7)$$

Due to the fast reaction time of the current control, it is also possible to use instead of equation (7) an approximation with a P element. In a first example, the mechanical model of the drive system is simplified as one-mass system. PT1 behaviour has been selected for the approximation of the current control.

The integrating character of the cost function $J_C$ in equation (15) leads to a neglect of disturbance inputs (e.g. load torque $T_L$). To increase the dynamic of the controller 110, it would also be possible to use measurable and/or observable disturbance inputs as an additional state in the model. This reduces the delay of the integrator in the cost function $J_C$, see equation (15). In this case, the state space model in equations (8) and (9) is extended with a combined state for the load torque $T_L$ and the friction torque $T_{fric}$. This state is measurable via a measuring shaft or is calculated by an observer.

The remaining states are all measurable, which avoids an additional observer. In some cases, some measurements are not accessible. In these cases, an observer can be added into the CCS-MPC approach.

$$\begin{bmatrix} \dfrac{di_q(t)}{dt} \\ \dfrac{d\omega_m(t)}{dt} \\ 0 \end{bmatrix} = \mathbf{A}_{cc} \begin{bmatrix} i_q(t) \\ \omega_m(t) \\ T_L(t) + T_{fric} \end{bmatrix} + \mathbf{B}_{cc} \cdot i_q^*(t) \quad (8)$$

$$y(t) = \omega_m(t) = \mathbf{C}_{cc} \begin{bmatrix} i_q(t) \\ \omega_m(t) \end{bmatrix} \quad (9)$$

$$\mathbf{A}_{cc} = \begin{bmatrix} -\dfrac{1}{T_{cl}} & 0 & 0 \\ \dfrac{3}{2}p\Psi_{PM}\dfrac{1}{J} & -\dfrac{d_{fric}}{J} & -\dfrac{1}{J} \\ 0 & 0 & 0 \end{bmatrix} \quad \mathbf{B}_{cc} = \begin{bmatrix} \dfrac{1}{T_{cl}} \\ 0 \\ 0 \end{bmatrix} \quad \mathbf{C}_{cc} = \begin{bmatrix} 0 & 1 & 0 \end{bmatrix}$$

In a second example, the mechanical model is expand to a two-mass system (TMS). The inertia J is divided into two inertia $J_m$ and $J_l$. Inertia $J_m$ and speed $\omega_m$ are assigned to the drive. Inertia $J_l$ and $\omega_l$ are assigned to the load machine. The two inertias are connected via a spring damper system. The damper has the viscous damping constant $d_{TMS}$ and $c_{TMS}$ is the spring constant. A proportional behaviour has been selected for the approximation of the current control in this example.

Furthermore, the state space model is not expanded by disturbance inputs (e.g. load torque $T_L$). The system is shown in figure 4 and can be described by the state space system in equations (10) and (11).

$$\begin{bmatrix} \dfrac{d\omega_m(t)}{dt} \\ \dfrac{d\Delta\vartheta(t)}{dt} \\ \dfrac{d\omega_l(t)}{dt} \end{bmatrix} = \mathbf{A}_{cc} \begin{bmatrix} \omega_m(t) \\ \Delta\vartheta(t) \\ \omega_l(t) \end{bmatrix} + \mathbf{B}_{cc} \cdot i_q^*(t) \quad (10)$$

$$\mathbf{y}(t) = \mathbf{C}_{cc} \begin{bmatrix} \omega_m(t) \\ \Delta\vartheta(t) \\ \omega_l(t) \end{bmatrix} \quad (11)$$

$$\mathbf{A}_{cc} = \begin{bmatrix} -\dfrac{d_{fric}+d_{TMS}}{J_m} & -\dfrac{c_{TMS}}{J_m} & \dfrac{d_{TMS}}{J_m} \\ 1 & 0 & -1 \\ \dfrac{d_{TMS}}{J_l} & \dfrac{c_{TMS}}{J_l} & -\dfrac{d_{TMS}}{J_l} \end{bmatrix} \quad \mathbf{B}_{cc} = \begin{bmatrix} \dfrac{3}{2}p\Psi_{PM}\dfrac{1}{J_m} \\ 0 \\ 0 \end{bmatrix} \quad \mathbf{C}_{cc} = \begin{bmatrix} 0 & 1 & 0 \\ 0 & 0 & 1 \end{bmatrix}$$

For the design of the CCS-MPC speed controller 110, single input single output systems (SISO) and/or for multiple input multiple output systems (MIMO) may be suitable. Usually, equal or less outputs than inputs are necessary in order to reduce all control errors to zero. In the second example the system has less inputs than outputs. This means that not every control error is compensated to zero. In general, the second example allows to implement an active oscillation damping with the mechanical CCS controller 110 by minimizing the angle $\Delta\vartheta$ and by reducing the speed error to zero with the cost function $J_C$ in equation (15). The aim of an active oscillation damping can be a lower settling time and/or smaller overshoots as shown in figure 7.

Equations (12) and (13) exemplarily describe the discrete SISO or MIMO system, in which the index $m$ describes the discrete character. The matrices $\mathbf{A}_m$, $\mathbf{B}_m$ and $\mathbf{C}_m$ are based on $\mathbf{A}_{CC}$, $\mathbf{B}_{CC}$ and $\mathbf{C}_{CC}$. The equations are discretized with the control rate $T_{CC}$ of the CCS-MPC approach.

$$\mathbf{x}(k+1) = \mathbf{A}_m \mathbf{x}(k) + \mathbf{B}_m \mathbf{u}(k) \quad (12)$$

$$y(k) = \mathbf{C}_m \mathbf{x}(k) \quad (13)$$

For the controller 110, a discrete augmented state space model is necessary. With the augmented state space model the optimisation problem can be described by equation (14).

$$\mathbf{Y}(k) = \mathbf{F}\mathbf{x}(k) + \phi \Delta \mathbf{U}(k) \quad (14)$$

Whereat the output vector $Y$ has the size of the prediction horizon $N_p$ and the input vector $\Delta U$ has the size of the control horizon $N_C$. With the matrices:

$$
\mathbf{F} = \begin{bmatrix} \mathbf{C}_\lambda \cdot \mathbf{A}_e \\ \mathbf{C}_\lambda \cdot \mathbf{A}_e^2 \\ \mathbf{C}_\lambda \cdot \mathbf{A}_e^3 \\ \mathbf{C}_\lambda \cdot \mathbf{A}_e^4 \\ \mathbf{C}_\lambda \cdot \mathbf{A}_e^5 \\ \cdots \\ \mathbf{C}_\lambda \cdot \mathbf{A}_e^{N_p} \end{bmatrix} \quad
\phi = \begin{bmatrix} \mathbf{C}_\lambda \cdot \mathbf{B}_e & 0 & \cdots & 0 \\ \mathbf{C}_\lambda \cdot \mathbf{A}_e \cdot \mathbf{B}_e & \mathbf{C}_\lambda \cdot \mathbf{B}_e & \cdots & 0 \\ \mathbf{C}_\lambda \cdot \mathbf{A}_e^2 \cdot \mathbf{B}_e & \mathbf{C}_\lambda \cdot \mathbf{A}_e \cdot \mathbf{B}_e & \cdots & \mathbf{C}_\lambda \cdot \mathbf{B}_e \\ \mathbf{C}_\lambda \cdot \mathbf{A}_e^3 \cdot \mathbf{B}_e & \mathbf{C}_\lambda \cdot \mathbf{A}_e^2 \cdot \mathbf{B}_e & \cdots & \mathbf{C}_\lambda \cdot \mathbf{A}_e \cdot \mathbf{B}_e \\ \mathbf{C}_\lambda \cdot \mathbf{A}_e^4 \cdot \mathbf{B}_e & \mathbf{C}_\lambda \cdot \mathbf{A}_e^3 \cdot \mathbf{B}_e & \cdots & \mathbf{C}_\lambda \cdot \mathbf{A}_e^2 \cdot \mathbf{B}_e \\ & & \cdots & \\ \mathbf{C}_\lambda \cdot \mathbf{A}_e^{N_p-1} \cdot \mathbf{B}_e & \mathbf{C}_\lambda \cdot \mathbf{A}_e^{N_p-2} \cdot \mathbf{B}_e & \cdots & \mathbf{C}_\lambda \cdot \mathbf{A}_e^{N_p-3} \cdot \mathbf{B}_e \end{bmatrix}
$$

The matrices $A_e$, $B_e$ and $C_e$ are based on $A_m$, $B_m$ and $C_m$, whereat an additional row is added for each optimization criteria (e.g. $\omega_m$ or/and $\omega_l$). This is due to the weighting factors, whereat the weighting factors only modify the optimization criteria in the last rows and not the original equations in the first rows. $C_\lambda$ is the weighted output matrix based on $C_e$ and the weighting factors.

$$\mathbf{J}_c(k) = (\mathbf{R}_s - \mathbf{Y}(k))^T (\mathbf{R}_s - \mathbf{Y}(k)) + \Delta \mathbf{U}^T(k) \mathbf{R}_v \Delta \mathbf{U}(k) \quad (15)$$

The quadratic cost function $J_C$ for the speed and/or position control is defined in equation (15). $R_S$ is the reference vector and $R_V$ is a diagonal matrix with the overall tuning factor $r_w$.

After derivation and changeover of equation (15), the optimization problem of the cost function leads to equation (16).

$$\Delta \mathbf{U}(k) = (\phi^T \phi + \mathbf{R}_v)^{-1} \phi^T (\mathbf{R}_s - \mathbf{F}\mathbf{x}(k)) \quad (16)$$

The CCS-MPC approach can also be modified. For example, also a Kalman-filter can be added. In one or more aspect of the present disclosure a prediction of more than one-step ahead with a CCS-MPC approach may be included, based on an analytical model of the controlled mechanical system. Therefore, modifications (e.g. an additional observer, other/additional control criteria) of the proposed CCS-MPC approach are also included in the present disclosure.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors.

Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media.

Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, - operations or -steps, respectively. Such sub acts may be included and part of the disclosure of this single act unless explicitly excluded.

**Claims**

1. A method for controlling a mechatronic system, the method comprising:

   receiving (S110), by a first control unit, values including mechanical characteristics of the mechatronic system, from the mechatronic system;
   predicting (S120), by the first control unit, a mechanical behaviour of the mechatronic system based on a continuous model predictive control approach applied on the values including the mechanical characteristics of the mechatronic system, wherein the continuous model predictive control approach comprises a Continuous Control Set Model Predictive Control, CCS-MPC, approach;
   providing (S130), by the first control unit, the predicted mechanical behaviour to a second control unit;
   receiving (S140), by the second control unit, values including electrical characteristics of the mechatronic system, from the mechatronic system;
   optimizing (S150), by the second control unit, a control signal for an actuator using

   i) the predicted mechanical behaviour and
   ii) a prediction of an electrical behaviour of the mechatronic system based on a direct model predictive control approach applied on the values including the electrical characteristics of the mechatronic system, wherein the direct model predictive control approach comprises a Finite Control Set Model Predictive Control, FCS-MPC, approach; and

   providing (S160), by the second control unit, the control signal to the actuator for controlling the mechatronic system.

2. The method according to claim 1, wherein the first and second control units are cascaded, and wherein the first control unit defines an upper control layer and the second control unit defines a lower control layer.

3. The method according to claim 1 or 2, wherein the mechatronic system comprises an electrical drive and a coupled mechanical load.

4. The method according to any one of the foregoing claims, wherein the values including the mechanical characteristics of the mechatronic system include position information and/or speed information; and
   wherein the values including the electrical characteristics of the mechatronic system include a current information, torque information and/or flux information of the mechatronic system.

5. The method according to any one of the foregoing claims, wherein the values including the mechanical characteristics of the mechatronic system indicate values for the electrical drive and/or for the mechanical load.

6. The method according to any one of the foregoing claims, wherein the values including the mechanical characteristics of the mechatronic system and the values including the electrical characteristics of the mechatronic system are measured or estimated input values from the mechatronic system as well as reference values.

7. The method according to any one of the foregoing claims, wherein the continuous model predictive control approach and the direct model predictive control approach are each based on an analytical description of the mechatronic system.

8. The method according to any one of the foregoing claims, wherein the step size of predicting the electrical behaviour has a higher calculation rate than the step size of predicting the mechanical behaviour; and/or wherein the step of predicting the electrical behaviour is performed at least for two sub-intervals within a time interval, in which the step of predicting the mechanical behaviour is performed.

9. The method according to any one of the foregoing claims, wherein all steps are carried out on a system-on-a-chip, SoC, calculation platform with one or more processors and an FPGA in a single chip, wherein the method is real-time implemented on the SoC calculation platform, and wherein the second control unit is implemented on the FPGA and the first control unit is implemented on the one or

10. A computer program, which, when being executed by a processor and/or FPGA, is adapted to carry out the steps of the method according to any one of claims 1 to 8.

11. A computer-readable medium on which a computer program according to claim 10 is stored.

12. A controller (100) for controlling a mechatronic system (130), the controller (100) comprising:

   a first control unit (110) adapted to:

   - receive values including mechanical characteristics of the mechatronic system (130), from the mechatronic system (130),
   - predict a mechanical behaviour of the mechatronic system (130) based on a continuous model predictive control approach applied on the values including mechanical characteristics of the mechatronic system (130), wherein the continuous model predictive control approach comprises a Continuous Control Set Model Predictive Control, CCS-MPC, approach; and
   - provide the predicted mechanical behaviour to a second control unit (120);

   the second control unit (120) adapted to:

   - receive values including electrical characteristics of the mechatronic system (130), from the mechatronic system (130),
   - optimize a control signal for an actuator (140) using

      i) the predicted mechanical behaviour and
      ii) a prediction of an electrical behaviour of the mechatronic system (130) based on a direct model predictive control approach applied on the values including the electrical characteristics of the mechatronic system (130), wherein the direct model predictive control approach comprises a Finite Control Set Model Predictive Control, FCS-MPC, approach, and

   - provide the control signal to the actuator (140) for controlling the mechatronic system (130).

13. A system (200; 300; 400) which includes a mechatronic system (130) and the controller (100) according to claim 12

**Patentansprüche**

1. Verfahren zur Steuerung eines mechatronischen Systems, wobei das Verfahren umfasst:

   Empfangen (S110) von Werten, die mechanische Eigenschaften des mechatronischen Systems beinhalten, von einer ersten Steuereinheit;

Vorhersagen (S120) eines mechanischen Verhaltens des mechatronischen Systems durch die erste Steuereinheit auf der Grundlage eines kontinuierlichen modellprädiktiven Steuerungsansatzes, der auf die Werte einschließlich der mechanischen Eigenschaften des mechatronischen Systems angewendet wird; wobei der kontinuierliche modellprädiktive Steuerungsansatz einen Continuous-Control-Set-Model-Predictive-Control, CCS-MPC, -Ansatz umfasst;

Bereitstellen (S130) des vorhergesagten mechanischen Verhaltens durch die erste Steuereinheit an eine zweite Steuereinheit;

Empfangen (S140) von Werten einschließlich der elektrischen Eigenschaften des mechatronischen Systems, durch die zweite Steuereinheit, von dem mechatronischen System;

Optimieren (S150) eines Steuersignals für einen Aktor durch die zweite Steuereinheit unter Verwendung von

i) dem vorhergesagten mechanischen Verhalten und
ii) einer Vorhersage eines elektrischen Verhaltens des mechatronischen Systems auf der Grundlage eines direkten modellprädiktiven Steuerungsansatzes, der auf die Werte einschließlich der elektrischen Eigenschaften des mechatronischen Systems angewendet wird, wobei der direkte modellprädiktive Steuerungsansatz einen Finite Control Set Model Predictive Control, FCS-MPC, -Ansatz umfasst; und

Bereitstellen (S160) des Steuersignals durch die zweite Steuereinheit an den Aktor zur Steuerung des mechatronischen Systems.

2. Verfahren nach Anspruch 1, wobei die erste und die zweite Steuereinheit kaskadiert sind und wobei die erste Steuereinheit eine obere Steuerschicht und die zweite Steuereinheit eine untere Steuerschicht definiert.

3. Verfahren nach Anspruch 1 oder 2, wobei das mechatronische System einen elektrischen Antrieb und eine gekoppelte mechanische Last umfasst.

4. Verfahren nach einem der vorangehenden Ansprüche, wobei die Werte einschließlich der mechanischen Eigenschaften des mechatronischen Systems Positionsinformationen und/oder Geschwindigkeitsinformationen umfassen; und
wobei die Werte einschließlich der elektrischen Eigenschaften des mechatronischen Systems eine Strominformation, eine Drehmomentinformation und/oder eine Flussinformation des mechatronischen Systems umfassen.

5. Verfahren nach einem der vorhergehenden Ansprüche, wobei die Werte einschließlich der mechanischen Eigenschaften des mechatronischen Systems Werte für den elektrischen Antrieb und/oder für die mechanische Last angeben.

6. Verfahren nach einem der vorangehenden Ansprüche, wobei die Werte einschließlich der mechanischen Eigenschaften des mechatronischen Systems und die Werte einschließlich der elektrischen Eigenschaften des mechatronischen Systems gemessene oder geschätzte Eingangswerte von dem mechatronischen System sowie Referenzwerte sind.

7. Verfahren nach einem der vorangehenden Ansprüche, wobei der kontinuierliche modellprädiktive Steuerungsansatz und der direkte modellprädiktive Steuerungsansatz jeweils auf einer analytischen Beschreibung des mechatronischen Systems beruhen.

8. Verfahren nach einem der vorangehenden Ansprüche, wobei die Schrittgröße zur Vorhersage des elektrischen Verhaltens eine höhere Berechnungsrate aufweist als die Schrittgröße zur Vorhersage des mechanischen Verhaltens; und/oder
wobei der Schritt zur Vorhersage des elektrischen Verhaltens für mindestens zwei Unterintervalle innerhalb eines Zeitintervalls durchgeführt wird, in dem der Schritt zur Vorhersage des mechanischen Verhaltens durchgeführt wird.

9. Verfahren nach einem der vorangehenden Ansprüche, wobei alle Schritte auf einer System-on-a-Chip, SoC, -Rechenplattform mit einem oder mehreren Prozessoren und einem FPGA in einem einzigen Chip ausgeführt werden, wobei das Verfahren in Echtzeit auf der SoC-Rechenplattform implementiert wird und wobei die zweite Steuereinheit auf dem FPGA und die erste Steuereinheit auf dem einen oder den mehreren Prozessoren implementiert wird.

10. Computerprogramm, das, wenn es von einem Prozessor und/oder FPGA ausgeführt wird, geeignet ist, die Schritte des Verfahrens nach einem der Ansprüche 1 bis 8 auszuführen.

**11.** Ein computerlesbares Medium, auf dem ein Computerprogramm gemäß Anspruch 10 gespeichert ist.

**12.** Steuerung (100) zur Steuerung eines mechatronischen Systems (130), wobei die Steuerung (100) aufweist:

eine erste Steuereinheit (110), die ausgebildet ist:

- Werte einschließlich mechanischer Eigenschaften des mechatronischen Systems (130) von dem mechatronischen System (130) zu erhalten,
- ein mechanisches Verhalten des mechatronischen Systems (130) auf der Grundlage eines kontinuierlichen modellprädiktiven Steuerungsansatzes vorherzusagen, der auf die Werte einschließlich mechanischer Eigenschaften des mechatronischen Systems (130) angewendet wird, wobei der kontinuierliche modellprädiktive Steuerungsansatz einen Continuous Control Set Model Predictive Control, CCS-MPS, -Ansatz umfasst; und
- das vorhergesagte mechanische Verhalten an einer zweiten Steuereinheit (120) bereitzustellen;

wobei die zweite Steuereinheit (120) ausgebildet ist:

- Werte einschließlich elektrischer Eigenschaften des mechatronischen Systems (130) von dem mechatronischen System (130) zu erhalten,
- ein Steuersignal für einen Aktor (140) zu optimieren unter Verwendung

i) des vorhergesagten mechanische Verhalten und
ii) einer Vorhersage eines elektrischen Verhaltens des mechatronischen Systems (130) auf der Grundlage eines direkten modellprädiktiven Steuerungsansatzes, der auf die Werte einschließlich der elektrischen Eigenschaften des mechatronischen Systems (130) angewandt wird, wobei der direkte modellprädiktive Regelungsansatz einen Finite Control Set Model Predictive Control, FCS-MPC, -Ansatz umfasst, und

- das Steuersignal an dem Aktor (140) zur Steuerung des mechatronischen Systems (130) bereitzustellen.

**13.** System (200; 300; 400), das ein mechatronisches System (130) und die Steuerung (100) nach Anspruch 12 aufweist.

**Revendications**

**1.** Procédé de commande d'un système mécatronique, le procédé consistant à :

recevoir (S110), par une première unité de commande, des valeurs comprenant des caractéristiques du système mécatronique, en provenance du système mécatronique ;
prédire (S120), par la première unité de commande, un comportement mécanique du système mécatronique basé sur une approche de commande prédictive continue par modèle appliquée aux valeurs des caractéristiques mécaniques du système mécatronique ; dans lequel l'approche de commande prédictive continue par modèle comprend une approche de commande prédictive continue par modèle à ensemble de commande continue, CCS-MPC;
fournir (S130), par la première unité de commande, le comportement mécanique prédit à une seconde unité de commande ;
recevoir (S140), par la seconde unité de commande, des valeurs comprenant des caractéristiques électriques du système mécatronique, en provenance du système mécatronique ;
optimiser (S150), par la seconde unité de commande un signal de commande pour un actionneur se servant

i) du comportement mécanique prédit et
ii) d'une prédiction d'un comportement électrique du système mécatronique sur la base d'une approche de commande prédictive par modèle directe appliquée aux valeurs comprenant les caractéristiques électriques du système mécatronique, dans lequel l'approche de commande prédictive par modèle directe comprenant une approche de commande prédictive par modèle à ensemble de commande fini, FCS-MPC ; et

fournir (S160), par la seconde unité de commande, le signal de commande à l'actionneur pour commander le système mécatronique.

**2.** Procédé selon la revendication 1, dans lequel la première et la seconde unité de commande sont en cascade, et dans lequel la première unité de commande définit une couche de commande supérieure et la seconde unité de commande définit une couche de commande inférieure.

**3.** Procédé selon la revendication 1 ou 2, dans lequel le système mécatronique comprend un pilote électronique et une charge mécanique couplée.

**4.** Procédé selon l'une quelconque des revendications précédentes, dans lequel les valeurs comprenant les caractéristiques mécaniques du système mécatronique comprennent les informations de position et/ou les informations relatives à la vitesse ; et
dans lequel les valeurs comprenant les caractéristiques électroniques du système mécatronique comprennent une information relative au courant, une information de couple et/ou une information de flux du système mécatronique.

**5.** Procédé selon l'une quelconque des revendications précédentes, dans lequel les valeurs comprenant les caractéristiques mécaniques du système mécatronique indiquent les valeurs pour le pilote électrique et/ou la charge mécanique.

**6.** Procédé selon l'une quelconque des revendications précédentes, dans lequel les valeurs comprenant les caractéristiques mécaniques du système mécatronique et les valeurs indiquant les caractéristiques électroniques du système mécatronique sont des valeurs d'entrée mesurées ou estimées à partir du système mécatronique en tant que valeurs de référence.

**7.** Procédé selon l'une quelconque des revendications précédentes, dans lequel l'approche de commande prédictive par modèle continue et l'approche de commande prédictive par modèle directe sont chacune basées sur un description d'analyse du système mécatronique.

**8.** Procédé selon l'une quelconque des revendications précédentes, dans lequel la taille de l'étape de prédiction du comportement électrique a une vitesse de calcul supérieure à la taille d'étape de prédiction du comportement mécanique ; et/ou
dans lequel l'étape de prédiction du comportement électrique est réalisée au moins pour deux sous-intervalles dans un intervalle de temps, dans lequel l'étape de prédiction du comportement mécanique est réalisée.

**9.** Procédé selon l'une quelconque des revendications précédentes, dans lequel toutes les étapes sont réalisées sur une plateforme de calcul de système sur puce, SoC, au moyen d'un ou de plusieurs processeurs et d'un FPGA dans une seule puce, dans lequel le procédé est mis en œuvre en temps réel sur la plateforme de calcul SoC, et dans lequel la seconde unité de commande est mise en œuvre sur le FPGA et la première unité de commande est mise en œuvre sur le ou les processeurs.

**10.** Programme informatique, qui, lorsqu'il est exécuté par un processeur et/ou un FPGA, est conçu pour réaliser les étapes du procédé selon l'une quelconque des revendications 1 à 8.

**11.** Support lisible par ordinateur sur lequel est stocké un programme informatique selon la revendication 10.

**12.** Organe de commande (100) destiné à commander un système mécatronique (130), l'organe de commande (100) comprenant :

une première unité de commande (110) conçue pour :

- recevoir des valeurs comprenant des caractéristiques mécaniques du système mécatronique (130), provenance du système mécatronique (130),
- prédire un comportement mécanique du système mécatronique (130) basé sur une approche de commande prédictive continue par modèle appliquée aux valeurs des caractéristiques mécaniques du système mécatronique (130), dans lequel l'approche de commande prédictive continue par modèle comprend une approche de commande prédictive continue par modèle à ensemble de commande continue, CCS-MPC; et
- fournir le comportement mécanique prédit à une seconde unité de commande (120) ;

la seconde unité de commande (120) étant conçue pour :

- recevoir des valeurs comprenant des caractéristiques électriques du système mécatronique (130), en provenance du système mécatronique (130) ;
- optimiser un signal de commande pour un actionneur (140) se servant

i) du comportement mécanique prédit et

ii) d'une prédiction d'un comportement électrique du système mécatronique (130) sur la base d'une approche de commande prédictive par modèle directe appliquée aux valeurs comprenant les caractéristiques électriques du système mécatronique (130), dans lequel l'approche de commande prédictive par modèle directe comprenant une approche de commande prédictive par modèle à ensemble de commande fini, FCS-MPC ; et

- fournir le signal de commande à l'actionneur pour commander le système mécatronique (130).

13. Système (200, 300, 400) qui comprend un système mécatronique (130) et l'organe de commande (100) selon la revendication 12.

S110

S120

S130

S140

S150

S160

Fig.1

Fig.2

EP 3 614 218 B1

Fig.3

Fig.4

Fig.5

Fig.6

CCF-MPC ($f_{cc}$=10kHz, $f_{cf}$=100kHz)

FOC ($f_c$=10kHz)

FOC ($f_c$=50kHz)

speed (rpm)

1020
1000
980
960

0,058  0,06  0,062  0,064  0,066  0,068  0,07
time (s)

speed (rpm)

1050
1000
950
900
850

0,02  0,022  0,024  0,026  0,028  0,03
time (s)

speed (rpm)

1200
1000
800
600
400
200
0

0  0,01  0,02  0,03  0,04  0,05  0,06  0,07  0,08  0,09  0,1
time (s)

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014033155 A1
- WO 2014064141 A1
- US 20170133845 A1
- WO 2009080407 A1
- WO 2013110532 A1
- WO 2014006200 A1
- WO 2016202623 A1
- WO 2014183930 A1